(19) Europäisches Patentamt

European Patent Office

Office européen des brevets

(11) Veröffentlichungsnummer : **0 105 183**
**B1**

(12) **EUROPÄISCHE PATENTSCHRIFT**

(45) Veröffentlichungstag der Patentschrift :
22.10.86

(21) Anmeldenummer : 83108485.0

(22) Anmeldetag : 29.08.83

(51) Int. Cl.⁴ : **C 01 B 33/28**, B 01 D 35/20

(54) **Vorrichtung und Verfahren zur Behandlung einer Zeolithsuspension zum Zwecke der Feststoffabtrennung von der Mutter- und/oder Waschlauge.**

(30) Priorität : 08.09.82 DE 3233289

(43) Veröffentlichungstag der Anmeldung :
11.04.84 Patentblatt 84/15

(45) Bekanntmachung des Hinweises auf die Patenterteilung : 22.10.86 Patentblatt 86/43

(84) Benannte Vertragsstaaten :
AT BE CH DE FR GB IT LI LU NL SE

(56) Entgegenhaltungen :
EP-A- 0 058 908
DE-A- 2 633 304
US-A- 4 166 034

(73) Patentinhaber : Henkel Kommanditgesellschaft auf Aktien
Postfach 1100 Henkelstrasse 67
D-4000 Düsseldorf-Holthausen (DE)

(72) Erfinder : Diekötter, Friedrich Wilhelm, Dr.
Drosselweg 21
D-4018 Langenfeld (DE)
Erfinder : Hönges, Edgar
Hummelster Strasse 20
D-4010 Hilden (DE)
Erfinder : Just, Günther
Verdistrasse 48
D-4010 Hilden (DE)
Erfinder : Smolka, Heinz-Gerd, Dr.
20 Brigish Drive Northcliff Ext. 2
Johannesburg (ZA)
Erfinder : Wüst, Willi, Dr.
Fasanenring 32
D-4030 Ratingen 6 (DE)

EP 0 105 183 B1

## Beschreibung

Die Erfindung betrifft eine Vorrichtung zur Behandlung einer Zeolithsuspension zum Zwecke der Feststoffabtrennung von der Mutter- und/oder Waschlauge bei der Herstellung von Zeolith, mit einem Vakuumfilter, welches ein umlaufendes Filtertuch mit einem horizontalverlaufenden Trockensaugbereich aufweist.

Bei der Herstellung von Zeolith, insbesondere Zeolith vom Typ 4A, wird die aus vorhergehenden bekannten Verfahrensschritten stammende Zeolithsuspension einer Feststoffabtrennung von der Wasch- und/oder Mutterlauge unterworfen, um den Aufwand, insbesondere Energieeinsatz, bei einer anschließenden Trocknung, so gering wie möglich zu halten.

Gemäß einer in der DE-A-2 633 304 beschriebenen Verfahrensweise wird die in Form einer wäßrigen Masse vorliegende Zeolithsuspension durch eine Leitung einer Feststofftrennzone zugeführt, die aus einem fortlaufenden porösen Band besteht. An unterschiedliche Abschnitte des Bandes wird mit Hilfe einer geeigneten Vakuumquelle ein gesteuertes Vakuum angelegt, wobei die Zeolithsuspension mit kontrollierter Geschwindigkeit durch eine Verteilungseinrichtung auf das Band aufgegeben wird. Das Absaugen der Mutterlauge und zusätzlich zugeführter Waschlauge aus der Zeolithsuspension erfolgt mittels Saugkästen, die unterhalb des porösen Filterbandes in Bewegungsrichtung des Filterbandes hin- und herbewegbar sind, wobei bei einer gleichgerichteten Vorwärtsbewegung von Filterband und Saugkästen diese an eine Vakuumquelle angeschlossen sind, während bei der entgegengesetzt zur Bewegungsrichtung des Filterbandes verlaufenden Rückführbewegung der Saugkästen diese belüftet sind. Durch das Absaugen der Mutter- und Waschlauge bildet sich auf dem Filterband ein teilweise entwässerter Filterkuchen aus, der am Abwurfende des Filterbandes von diesem abgenommen und anschließend vorzugsweise durch Sprühtrocknen getrocknet wird. Das getrocknete Produkt stellt eine zerbrechbare Masse dar, die leicht zu einem feinen Pulver zerkleinert werden kann.

Der mittels des beschriebenen Vakuumbandfilters erhaltene Filterkuchen enthält einen Anteil von etwa 50 % Wasser mit geringen Anteilen an Mutter- bzw. Waschlauge. Die Trocknung des die Vakuumbandfilteranlage verlassenden Filterkuchens mit einem Flüssigkeitsanteil von etwa 50 %bedingt einen hohen Energieverbrauch, beispielsweise Heizgasverbrauch im Fall einer Sprühtrocknung.

Die EP-A-0 058 908 betrifft ein Verfahren zur verbesserten Trocknung eines Filterkuchens, bei welchem dieser in Vibration — transversal zu seiner Bewegungsrichtung — versetzt wird. Der Filterkuchen befindet sich hierbei auf dem Filtertuch eines horizontal verlaufenden Vakuum-Bandfilters. Die Vibrationen werden auf den Filterkuchen mit Hilfe einer frei rotierenden vibrierenden Rolle übertragen, die auf der Oberfläche des Filterkuchens aufliegt.

Der Erfindung liegt die Aufgabe zugrunde, bei der Behandlung einer Zeolithsuspension — zum Zwecke der Feststoffabtrennung von der Mutter — und/oder Waschlauge bei der Herstellung von Zeolith — bereits im Bereich der Vakuum-Filteranlage eine Konzentrationssteigerung des Feststoffes im Filterkuchen über das bisher übliche Maß hinaus zu erreichen.

Dementsprechend betrifft die Erfindung eine Vorrichtung zur Behandlung einer Zeolithsuspension zum Zwecke der Feststoffabtrennung von der Mutter- und/oder Waschlauge bei der Herstellung von Zeolith mit einem Vakuumfilter, welches ein umlaufendes Filtertuch mit einem horizontalverlaufenden Trockensaugbereich aufweist, dadurch gekennzeichnet, daß zum Einleiten von Scherkräften in den Filterkuchen (8) über dem Filtertuch (2) mindestens ein Vibrator im Trockensaugbereich des Vakuumfilters angebracht ist, wobei der Vibrator eine mit geringem Abstand oberhalb des Filtertuches (2) befindliche und in den Filterkuchen (8) eintauchende Schlagleiste (7) umfaßt, die zu einer senkrecht zur Bewegung des Filtertuches (2) gerichteten Horizontalschwingung antreibbar ist.

Durch das Einleiten von Scherkräften in den nicht mehr flüssigen und praktisch bereits erstarrten Filterkuchen kommt es infolge der besonderen rheologischen Eigenschaften von Zeolith, insbesondere Zeolith vom Typ 4A, zu einer erneuten partiellen reversiblen Verflüssigung des Materials, so daß die Vakuumfilteranlage zu einer weiteren partiellen Abtrennung der flüssigen Phase in der Lage ist. Nach der durch das Einleiten von Scherkräften bedingten partiellen Verflüssigung kann somit der Filtrationsprozeß fortgesetzt und ein Teil der homogenen flüssigen Phase abgetrennt werden, während die Zeolithkristalle zurückbleiben. Man erhält dadurch einen dichter gepackten Filterkuchen mit einem höheren Zeolithanteil.

Bei Anwendung eines Vibrators läßt sich eine Konzentrationssteigerung von ca. 2 % erreichen, die Konzentration läßt sich mit weiteren zusätzlichen Vibratoren erhöhen.

Der Vorteil der erfindungsgemäßen Vorrichtung besteht somit darin, daß für die anschließende Trocknung, des Zeolithmaterials, weniger Energie verbraucht wird. Eine Konzentrationssteigerung des Filterkuchens und damit eine Herabsetzung des Flüssigkeitsanteiles hat eine spezifisch geringere Wasserverdampfung bei der Trocknung zur Folge, so daß es zu beträchlichen Energieeinsparungen kommt.

Im Rahmen der erfindungsgemäßen Vorrichtung ist vorgesehen, daß der Vibrator eine mit geringem Abstand oberhalb des Filtertuches befindliche und in den Filterkuchen eintauchende Schlagleiste umfaßt, die zu einer senkrecht zur Bewegung des Filtertuches gerichteten Horizontalschwingung antreibbar ist. Die Schlagleiste ist vorzugsweise an einer kammartigen Leiste befestigt, die am unteren Rand eines vertikal aufgehängten, federnd gelagerten Rahmens angebracht ist, an dem ein Schwingungserzeugungsaggregat befestigt ist. Derartige Schwingungsaggregate zur Erzielung einer oszillierenden Hin- und Herbewegung sind bekannt und bestehen beispielsweise aus zwei Unwuchtmotoren, die einander so zugeordnet sind, daß jeweils nur in eine Richtung wirksame Hin- und Herschwingungen impliziert werden, während Seitenschwingungen durch Interferenz unterdrückt werden.

Das erfindungsgemäße Verfahren zur Behandlung einer Zeolithsuspension zum Zwecke der Feststoffabtrennung von der Mutter- und/oder Waschlauge mit einem Vakuumfilter, welches ein umlaufendes Filtertuch mit einem horizontalverlaufenden Trockensaugbereich aufweist, ist erfindungsgemäß dadurch gekennzeichnet, daß man im Trockensaugbereich Scherkräfte in den Filterkuchen mittels einer Schlagleiste einleitet, die zu einer senkrecht zur Bewegung des Filtertuches gerichteten Horizontalschwingung angetrieben wird.

Die Größe des Vibrators hängt von der Dimensionierung der Filteranlage ab. Bei einem gegebenen Anwendungsfall beträgt die Länge der in den Filterkuchen eingetauchten Schlagleiste 2,8 m, die Amplitude der resultierenden Schwingung ca. 7 mm, die Frequenz 25 Hz und die Leistungsaufnahme 0,4 Kw.

Die erfindungsgemäße Vorrichtung wird im folgenden anhand der schematischen Zeichnung näher beschrieben, die in beispielhafter Weise einen sogenannten Pannevis-Filter mit Saugkästen zeigt, die innerhalb der Absaugbereiche in Bewegungsrichtung des Filtertuches hin und her verfahrbar sind.

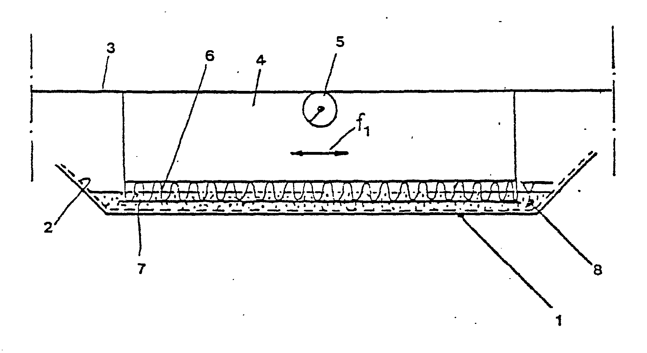

Die Zeichnung zeigt von einem an sich bekannten Vakuumbandfilter eine Filterwanne 1 zur Abstützung des oberen Trums eines porösen Filtertuches 2, das zu einer fortlaufenden Bewegung senkrecht zur Zeichnungsebene antreibbar ist. Die Filterwanne 1 ist mit nicht dargestellten Abläufen versehen, um während des Vakuumtaktes der Anlage Flüssigkeit abzusaugen.

Im Anschluß an den Vakuumtakt wird die Filterwanne belüftet und während des sogenannten Rückführtaktes entgegengesetzt zur Bewegungsrichtung des Filtertuches in eine Ausgangsstellung zurückgeführt, worauf sich wiederum ein Vakuumtakt anschließt usw. Oberhalb des Filtertuches 2 ist mittels einer Tragleiste 3 ein Rahmen 4 in beliebiger und nicht zur Erfindung gehörender Weise federnd derart abgestützt, daß nur geringe dynamische Kräfte beispielsweise auf ein Lagergehäuse übertragen werden. Zur weiteren Entkopplung kann das Lagergehäuse durch gedämpfte Federelemente mit dem Rahmen des Filters verbunden sein.

An dem Rahmen ist ein Schwingungserzeugungsaggregat 5 angebracht, welches beispielsweise zwei derart einander zugeordnete Unwuchtmotoren umfaßt, daß eine horizontale Rahmenschwingung in Richtung des Pfeiles $f_1$ senkrecht zur Bewegung des Filtertuches 2 erzeugt wird. An der Unterkante des Rahmens 4 ist mittels einer kammartigen Leiste 6 eine Schlagleiste 7 befestigt, die mit geringem Abstand oberhalb des Filtertuches 2 liegt und bei Ausbildung eines Filterkuchens 8 auf dem Filtertuch 2 in den Filterkuchen 8 eintaucht.

Der aus den Elementen 3, 4, 5, 6 und 7 gebildete Vibrator ist oberhalb des Filtertuches im Trockensaugbereich der Vakuumfilteranlage angebracht, in dem ein bereits entwässerter und damit praktisch starrer Filterkuchen vorliegt. Wenn der Vibrator in Tätigkeit ist, werden in den Filterkuchen Scherkräfte eingeleitet, was infolge der besonderen rheologischen Eigenschaften des Zeolithmaterials zu einer Verflüssigung bzw. einer partiellen Verflüssigung des Filterkuchens führt. Dieses ermöglicht eine weitere Abtrennung der reinen flüssigen Phase durch die Vakuumanlage da der Vibrator erfindungsgemäß im Arbeitsbereich eines vor dem Abwurfende des Filtertuches wirksamen Absaugbereiches angebracht ist. In Bewegungsrichtung des Filtertuches können ein oder mehrere weitere Vibratoren folgen, um erneut Scherkräfte in den Filterkuchen an den Stellen einzuleiten, an denen eine erneute Verfestigung bzw. Erstarrung des Filterkuchens eingetreten ist.

**Patentansprüche**

1. Vorrichtung zur Behandlung einer Zeolithsuspension zum Zwecke der Feststoffabtrennung von der Mutter- und/oder Waschlauge bei der Herstellung von Zeolith, mit einem Vakuumfilter, welches ein umlaufendes Filtertuch mit einem horizontalverlaufenden Trockensaugbereich aufweist, dadurch gekennzeichnet, daß zum Einleiten von Scherkräften in den Filterkuchen (8) über dem Filtertuch (2) mindestens ein Vibrator im Trockensaugbereich des Vakuumfilters angebracht ist, wobei der Vibrator eine mit geringem Abstand oberhalb des Filtertuches (2) befindliche und in den Filterkuchen (8) eintauchende Schlagleiste (7) umfaßt, die zu einer senkrecht zur Bewegung des Filtertuches (2) gerichteten Horizontalschwingung antreibbar ist.

2. Vorrichtung zur Behandlung einer Zeolithsuspension nach Anspruch 1, dadurch gekennzeichnet, daß die Schlagleiste (7) an einer kammartigen Leiste (6) befestigt ist, die am unteren Rand eines vertikal aufgehängten federnd gelagerten Rahmens (4) angebracht ist, an dem ein Schwingungserzeugungsaggregat (5) befestigt ist.

3. Verfahren zur Behandlung einer Zeolithsuspension zum Zwecke der Feststoffabtrennung von der Mutter- und/oder Waschlauge mit einem Vakuumfilter, welches ein umlaufendes Filtertuch mit einem horizontalverlaufenden Trockensaugbereich aufweist, dadurch gekennzeichnet, daß man im Trockensaugbereich Scherkräfte in den Filterkuchen (8) mittels einer Schlagleiste (7) einleitet, die zu einer senkrecht zur Bewegung des Filtertuches (2) gerichteten Horizontalschwingung angetrieben wird.

## Claims

1. An apparatus for treating a zeolite suspension for the purpose of separating solids from the mother and/or wash liquor in the production of zeolite, comprising a vacuum filter with a circulating filter cloth having a horizontally extending suction drying zone, characterized in that, to introduce shear forces into the filter cake (8), at least one vibrator is arranged above the filter cloth (2) in the suction drying zone of the vacuum filter, the vibrator comprising a striker bar (7) which is disposed just above the filter cloth (2), dipping into the filter cake (8), and which vibrates horizontally perpendicularly of the movement of the filter cloth (2) under the power of a drive source.

2. An apparatus for treating a zeolite suspension as claimed in Claim 1, characterized in that the striker bar (7) is fixed to a comb-like bar (6) arranged on the lower edge of a vertically suspended, spring-mounted frame (4) to which a vibration-generating unit (5) is fixed.

3. A process for treating a zeolite suspension for the purpose of separating solids from the mother and/or wash liquor using a vacuum filter comprising a circulating filter cloth with a horizontally extending suction drying zone, characterized in that, in the suction drying zone, shear forces are introduced into the filter cake (8) by means of a striker bar (7) which vibrates horizontally perpendicularly of the movement of the filter cloth (2) under the power of a drive source.

## Revendications

1. Dispositif pour le traitement d'une suspension de zéolites en vue de séparer les matières solides de la liqueur mère et/ou de la lessive au cours de la fabrication de zéolites et ce, au moyen d'un filtre à vide qui comprend un tissu filtrant rotatif pourvu d'une zone d'aspiration à sec se développant horizontalement, caractérisé en ce qu'au moins un vibrateur est disposé dans la zone d'aspiration à sec du filtre à vide pour introduire des forces de cisaillement dans le gâteau de filtration (8) au-dessus du tissu filtrant (2), le vibrateur comprenant une règle de frappe (7) immergeant dans le gâteau de filtration (8) et se trouvant à une courte distance au-dessus du tissu filtrant (2) et à même d'être animée d'une oscillation horizontale orientée verticalement au mouvement du tissu filtrant (2).

2. Dispositif pour le traitement d'une suspension de zéolites selon la revendication 1, caractérisé en ce que la règle de frappe (7) est attachée à une règle (6) en forme de peigne disposée sur le bord inférieur d'un cadre (4) monté élastiquement, suspendu verticalement et sur lequel est fixé un générateur d'oscillations (5).

3. Procédé de traitement d'une suspension de zéolites en vue de séparer les matières solides de la liqueur mère et/ou de la lessive au moyen d'un filtre à vide qui comprend un tissu filtrant rotatif pourvu d'une zone d'aspiration à sec se développant horizontalement, caractérisé en ce que, dans la zone d'aspiration à sec, on introduit des forces de cisaillement dans le gâteau de filtration (8) au moyen d'une règle de frappe (7) animée d'une oscillation horizontale orientée verticalement au mouvement du tissu filtrant (2).